# EUROPÄISCHE PATENTSCHRIFT

(11) **EP 0 662 571 B1**
(45) Veröffentlichungstag und Bekanntmachung des Hinweises auf die Patenterteilung: **09.04.1997**
(21) Anmeldenummer: 94119642.0
(22) Anmeldetag: 13.12.1994
(51) Int. Cl.: F16G 1/06, F16G 5/04

(54) **Kraftübertragungsriemen aus elastomerem Werkstoff mit günstige Gleiteigenschaften aufweisenden Riemenoberflächen**
Elastomeric drive belt with belt faces having good friction properties
Courroie de transmission en matériau élastomère présentant des surfaces ayant de barres propriétés de glissement

(30) Priorität: 10.01.1994 DE 4400434
(43) Veröffentlichungstag der Anmeldung: 12.07.1995
(73) Patentinhaber: Continental Aktiengesellschaft, 30165 Hannover (DE)
(72) Erfinder: Schütte, Dr. Klaus, D-30952 Ronnenberg (DE); Berger, Ralf, D-30559 Hannover (DE); Manger, Norbert, D-30851 Langenhagen (DE); Herrmann, Dr. Wolfram, D-30916 Isernhagen (DE); Mahnken, Claus-Lüder, D-27367 Ahausen (DE)

(56) Entgegenhaltungen:
- EP-A- 0 143 180
- EP-A- 0 240 936
- DE-A- 2 211 278
- DE-A- 2 724 509
- DE-A- 2 726 904
- GB-A- 868 916
- US-A- 3 542 633
- Derwent Publications Ltd., London, GB; AN 86-235670 'WORLD PATENTS INDEX' & JP-A-61 165 045 (BANDO CHEM.) 25. Juli 1986
- PATENT ABSTRACTS OF JAPAN vol. 7, no. 153 (M-226) 5. Juli 1983 & JP-A-58 061 347 (DAIKIN KOGYO) 12. April 1983

## Beschreibung

Die Erfindung betrifft einen Kraftübertragungsriemen aus elastomerem Werkstoff mit einer in den elastischen Riemenkörper eingebetteten Zugträgerlage und mit einer reibungsverringernden, die Gleiteigenschaften begünstigenden Ausbildung.

Elastomere Kraftübertragungsriemen oder Treibriemen, wie beispielsweise Keilriemen, Keilrippenriemen oder Gummizahnriemen, weisen einen ausvulkanisierten oder ausgehärteten Riemenkörper auf. Sie unterliegen verschiedenartigen Anforderungen.

Die bewegungsübertragenden, mit den Riemenscheiben zusammenwirkenden Riemenoberflächen unterliegen einer hohen mechanischen Beanspruchung. Diese Beanspruchung führt zu einem die Lebensdauer des Riemens beeinträchtigenden Abrieb oder Verschleiß.

Die Außenflächen des Riemens sind chemischen Angriffen aufgrund von Witterungs- und Betriebsmedieneinflüssen ausgesetzt. Der Kraftübertragungsriemen soll seine bestimmten Eigenschaften, wie z.B. sein elastisches Verhalten, auch bei Tiefst- und Höchsttemperaturen möglichst nicht verlieren. Weiterhin erleidet der Riemenkörper im Laufe seiner Betriebszeit eine Versprödung der Gummierungsbestandteile, weil Weichmacheranteile ausdiffundieren und versprödungsfördernde Stoffe, wie z.B. Ozon, angreifen.

Diese geschilderten Einflüsse bzw. Erscheinungen führen zu einer Lebensdauerbegrenzung des Kraftübertragungsriemens. Die Anforderungen an qualitativ hochstehende Riemen formulieren sich darin, diesen Einflüssen weitgehend zu widerstehen.

Eine weitere Produktanforderung an die Kraftübertragungsriemen besteht in der ständig wichtiger werdenden Forderung nach einem besonders geringen Geräuschniveau des Riementriebes. Die Senkung der Laufgeräusche des Kraftübertragungsriemens in den Riemenscheiben soll besonders im Kfz-Bereich und Hausgüterindustriebereich erreicht werden.

Aus der DE-B- 27 24 509 ist ein als Keilriemen ausgebildeter Kraftübertragungsriemen bekannt, der eine horizontale, mittig im Querschnitt angeordnete Gummischicht aufweist, in der ein Anti-Reibungsmaterial in Form von Graphit homogen verteilt ist. Mit dieser Ausbildung soll eine hohe Formstabilität des Riemens erreicht werden. Die bewegungsübertragenden Außenflächen des Keilriemens weisen zwar ein niedrigeren Reibungskoeffizienten auf, der aber über die Seitenfläche gesehen sich mit Bereichen höherer Reibungskoeffizienten abwechselt. Diese Ausbildung wird den vorstehend genannten Anforderungen nicht gerecht.

Aus der DE-B- 27 26 904 ist ein endloser Keilriemen bekannt, in dem homogen verteiltes Anti-Reibungsmaterial vorhanden ist. Der Riemenkörper besteht aus einer elastomeren Verbindung mit einem Polymer und 15 bis 90 Gewichtsteilen Graphit pro 100 Gewichtsteile Polymer. Durch diese Ausbildung sollen die Seitenwände des Keilriemens einen wesentlich verminderten Reibungskoeffizienten aufweisen. Dadurch können die Reibungskräfte und damit die Wärmeentwicklung des Riemens vermindert werden. Infolge der dadurch verminderten Gesamtriemenspannung soll angeblich der Verschleiß kleiner und die Lebensdauer positiv beeinflußt sein.

Aus der EP-A- 0 240 936 ist ein endloser Keilriemen bekannt, der mit organischen Verstärkungsfasern versehen ist und ein Reibungsregulierungsmittel enthält, das aus einem Polytetrafluorethylenpulver besteht.

Die Einarbeitung von Antireibungsmaterial in den vollen Keilriemenkörper hat den Nachteil, daß die bewegungsübertragenden Riemenflächen keine geschlossenen Oberflächen darstellen. Im Betrieb werden einzelne Materialteilchen herausgelöst und stellen Störstellen dar, die Angriffspunkte für die Versprödung und den Abrieb bieten. Die Einbindung des Antireibungsmaterials in den Werkstoff des Riemenkörpers hat den Charakter des Einbindens eines Füllstoffes. Bei einer hohen Konzentration dieses Füllstoffes ändern sich die Elastomereigenschaften des Riemenkörpers in ungünstiger Weise. Bei einer niedrigeren Konzentration des Füllstoffes ist die reibungsverringernde Wirkung nur sehr gering. Das Antireibungsmittel unterliegt durch den betrieblichen Abrieb einem Dauerverbrauch, weil es keine feste Haftung zu konstruktiven Flächen aufweist.

Der Erfindung liegt die Aufgabe zugrunde, einen Kraftübertragungsriemen der eingangs geschilderten Art zu schaffen, der einen verminderten Reibungskoeffizienten aufweist, ohne seine elastischen Gebrauchseigenschaften zu verändern, und der eine geringe Geräuschentwicklung bei gleichzeitig hoher Lebensdauer erreicht.

Die Aufgabe wird erfindungsgemäß dadurch gelöst, daß mindestens die verschleißabhängigen, bewegungsübertragenden Oberflächen des Kraftübertragungsriemens eine Beschichtung aufweisen, die mit der Riemenoberfläche mittels einer fluorhaltigen Kunststoff enthaltenden Polymermatrix vernetzt ist, wobei der fluorhaltige Kunststoff in der Polymermatrix grenzschichtlos eingebunden ist.

Fluorhaltige Kunststoffe weisen besonders gute Gleiteigenschaften auf. Der bekannteste fluorhaltige Kunststoff, Polytetrafluorethylen (PTFE), ist ein selbstschmierende Gleiteigenschaften aufweisender Kunststoff. Durch die Einbindung in eine auf der jeweiligen Riemenoberfläche vernetzte, polymerhaltige Matrix wird er sicher an dem Riemenkörper ohne eine Grenzschichtbildung gebunden. Die Haftung zwischen dem elastomeren Riemenkörper und einem fluorhaltigen Kunststoff, wie z.B. Polytetrafluorethylen, enthaltenden Beschichtung ist sehr gut, obwohl normalerweise Polytetrafluorethylen auf dem elastomeren Grundkörper schlecht haften würde. Die Aufbringung in einer vernetzbaren, polymerhaltigen Matrix überwindet diese schlechte Haftungseigenschaft.

Die beschichtete Oberfläche wird gegenüber chemischen Angriffen geschützt. Der Abrieb wird wesentlich verringert. Die erfindungsgemäße Beschichtung bleibt über eine lange Lebensdauer elastisch und härtet auch im langfristigen Betrieb nicht ab. Dadurch werden Riß- bzw. Anrißbildungen des Riemenkörpers verhindert. Durch die fluorkunststoffhaltige Beschichtung wird die beschichtete Riemenoberfläche quasi versiegelt, was auch das Ausdünsten von Weichmacherbestandteilen vermindert. Das hat vorteilhaft zur Folge, daß eine Versprödung des Gummis des Riemenkörpers verhindert wird, was auch durch ein Ausgrenzen versprödungsfördernder Stoffe, wie z.B. Ozon, unterstützt wird.

Die Riemeneigenschaften bleiben über einen längeren Betriebszeitraum in ihren ursprünglichen Werten.

Eine vorteilhafte Ausgestaltung der Erfindung wird im Anspruch 2 gekennzeichnet. Durch die Ausbildung eines Kraftübertragungsriemens mit auf den Außenflächen angeordneten verkautschukten Armierungsgeweben wird einerseits bereits eine gewisse Geräuschreduzierung und andererseits eine Fläche mit niedrigerem Reibungskoeffezienten erzielt. Außerdem werden die bewegungsübertragenden Riemenflächen vor vorzeitigem Abrieb geschützt. Bei Gummizahnriemen verstärkt das Gewebe die Zahnkontur, so daß ein Abscheren der Zähne verhindert wird. Das verkautschukte Armierungsgewebe erhält auf seiner Außenseite eine Beschichtung aus einer vernetzten, polymerhaltigen Matrix, die einen fluorhaltigen Kunststoff enthält. Die Polymermatrix ist ohne sichtbare Grenzschichtbildung mit der verkautschukten Außenfläche des Armierungsgewebes sicher verbunden und kann im mechanischen Dauerbetrieb nicht abscheren. Ablöseerscheinungen der z.B. PTFE-haltigen Beschichtung sind nicht zu beobachten.

In vorteilhafter Ausgestaltung der Erfindung ist der fluorhaltige Kunststoff Polytetrafluorethylen.

In weiterer vorteilhafter Ausgestaltung der Erfindung sind die mit der Beschichtung versehenen Riemenoberflächen mit kurzen Fasern beflockt. Aus der DE-B-22 11 278 ist es zwar bekannt, Fasern über die bewegungsübertragenden Oberflächen eines Treibriemens hinausragen zu lassen. Dabei handelt es sich aber um in dem vollen Treibriemenkörper eingebettete Fasereinlagen. Die beflockten Fasern werden über die Polymermatrix an den Riemenkörper angebunden und liegen nicht im vollen elastomeren Riemenkörper vor, was eine Änderung des elastischen Verhaltens bedeuten würde. Es liegen keine negativen Eigenschaftsänderungen des Riemenkörpers durch die Faserbeflockung vor. Die Oberflächenfasern liegen in homogener Verteilung vor. Das Entstehen von Fasernestern ist verhindert.

In vorteilhafter Ausgestaltung der Erfindung enthält die fluorkunststoffhaltige Beschichtung einen Füllstoff aus einem dämpfende Wirkung aufweisenden Werkstoff. Durch diese Ausbildung werden schlagartige Belastungen des Riementriebes herabgesetzt und ein verbesserter Gleichlauf erzielt.

In weiterer vorteilhafter Ausgestaltung der Erfindung weist die Beschichtung einen Zusatz von leitfähigen Rußbestandteilen auf. Die Beschichtung bildet dadurch eine elektrisch leitende Oberfläche, was eine elektrostatische Aufladung des Riemenkörpers verhindert.

Durch die Erfindung wird ein Kraftübertragungsriemen geschaffen, der mit einer reibungsvermindernden Beschichtung versehen ist, die mit dem Gummikörper des Kraftübertragungsriemens durch Vernetzen eine stoffschlüssige Verbindung eingegangen ist.

Die Erfindung betrifft auch ein Verfahren zur Herstellung eines Kraftübertragungsriemens nach Anspruch 1. Es ist dadurch gekennzeichnet, daß mindestens auf die bewegungsübertragenden Oberflächen des Kraftübertragungsriemens eine flüssige, einen Fluorkunststoff, wie z.B. PTFE, enthaltende Polymermatrix, die vernetzbare Bestandteile enthält, aufgebracht wird, und daß die Polymermatrix getrocknet wird und dabei einen Vernetzungsvorgang zur Bindung mit dem elastomeren Riemenkörper durchläuft.

Zur Herstellung der Beschichtung kann eine auf Tetrafluorethylen basierende Polymer-enthaltende Beschichtungsmasse in Form einer Dispersion angewandt werden. Die flüssige Polymermatrix wird durch Sprühen oder Streichen in einer geeigneten Dicke von beispielsweise 50µ auf eine oder mehrere Riemenoberflächen aufgebracht. Sie durchdringt die Oberfläche des Riemenkörpers und verbindet sich dort bei dem Vernetzen bzw. Polymerisieren ohne eine Grenzschichtbildung. Es entsteht eine geschützte Riemenoberfläche, die quasi versiegelt wird, aber trotzdem das elastische Verhalten im Verbindungsbereich nicht nachteilig beeinflußt.

In vorteilhafter Ausgestaltung des Verfahrens wird die flüssige Polymermatrix vor dem Vulkanisieren des Riemenkörpers aufgebracht. Das sich anschließende gemeinsame Ausheizen bzw. Vulkanisieren von Polymermatrix und Riemenkörper ergibt eine formgenaue, gleichmäßige und konturechte Ausformung der Beschichtung auf dem Riemenkörper. Weiter wird dadurch eine hohe Haftkraft aufgrund der Co-Vulkanisation von Beschichtung und Riemenkörper erzielt. Die elastischen Eigenschaften des Riemenkörpers werden zwangsläufig auf die Beschichtung übertragen. Der technische Aufwand bei der Herstellung eines erfindungsgemäßen Kraftübertragungsriemens wird gesenkt, weil Aushärtung bzw. Vernetzung der Beschichtung und Vulkanisation des Riemenkörpers in einem einzigen Verfahrensschritt vorgenommen werden.

In weiterer vorteilhafter Ausgestaltung des erfindungsgemäßen Verfahrens werden die beschichteten Oberflächen des Kraftübertragungsriemens unter elektrostatischer Einwirkung mit kurzen Fasern beflockt. Die kurzen Fasern werden in die noch nicht abgetrocknete bzw. vernetzte Polymermatrix eingebracht und durch die elektrostatische Einwirkung ausgerichtet. Der folgende Trocknungsvorgang fixiert die beflockten Fasern.

Durch die Erfindung wird ein Kraftübertragungsriemen geschaffen, dessen riemenspezifische Eigenschaften länger in ihren ursprünglichen Werten verbleiben. Wird die verfahrensmäßige Beschichtung auf alle Riemenoberflächen aufgebracht, ist ein vollständiges Versiegeln des Riemenkörpers erreicht. Dadurch wird es möglich, eine niedrigere Elastomerqualität für den Riemenkörper zu wählen, da die Versiegelung mit der PTFE enthaltenden Polymermatrix ein Veredeln und ein Schutz vor einer zu frühen nachteiligen Änderung der Riemeneigenschaften ist.

Anhand der Zeichnung werden nachstehend drei Ausführungsbeispiele der Erfindung in schematischer Darstellung näher erläutert. Es zeigt
- Fig. 1: einen Keilriemen im Querschnitt,
- Fig. 2: einen Teillängsschnitt durch einen beflockten Gummizahnriemen,
- Fig. 3: einen Teillängsschnitt durch einen mit einer gefüllten Beschichtung versehenen Gummizahnriemen.

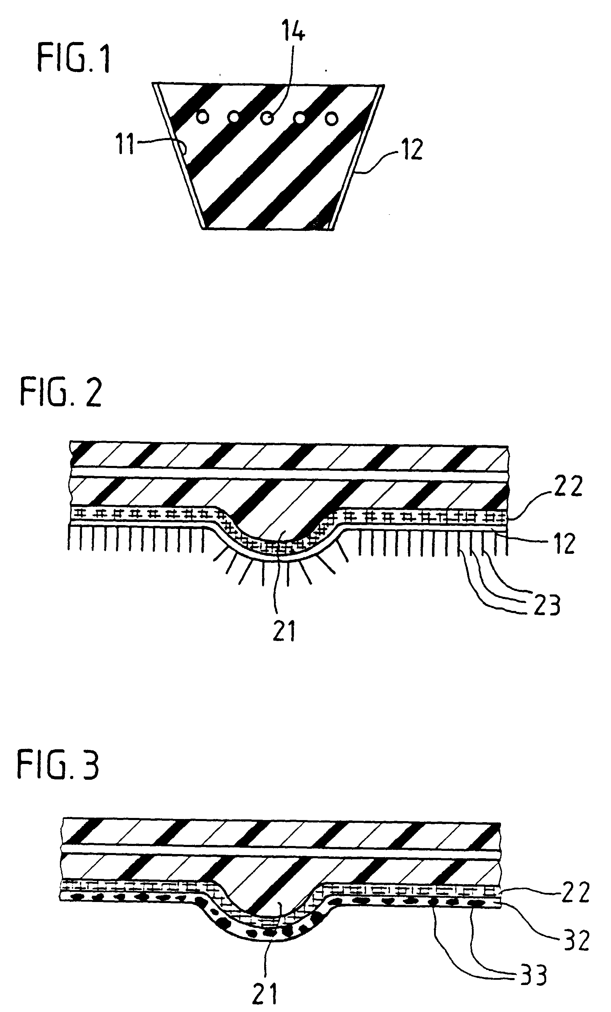

Der in Fig. 1 gezeigte Keilriemen weist auf seinen tragenden Flanken 11 jeweils eine Beschichtung 12 aus einer vernetzten, PTFE-enthaltenden Polymermatrix auf. Die Polymermatrix ist eine vernetzte Bindung mit den Oberflächen der Flanken 11 eingegangen, wobei eine ausgeprägte Grenzschichtbildung nicht vorliegt. Mit 14 sind undehnbare Zugstränge bezeichnet. Der Grundkörper des Keilriemens besteht aus CR-Kautschuk (Polychloroprenkautschuk).

Der in der Fig. 2 gezeigte Gummizahnriemen weist auf seiner angeformte Zähne 21 aufweisenden Laufseite ein fest aufgebrachtes, verkautschuktes Armierungsgewebe 22 auf. Dieses verkautschukte Armierungsgewebe 22 besteht aus Polyamid. Die Außenfläche des Armierungsgewebes 22 ist mit einer Beschichtung 12 aus einer vernetzten Polymermatrix, die 20% PTFE enthält, versehen. Der Rest sind monomere oder oligomere Polymerbausteine beispielsweise auf der Basis von Isocyanat.

Die PTFE-Beschichtung 12 trägt nach außen gerichtete, aufgeflockte Fasern 23, die den Leiselauf des Riementriebes weiter steigern.

Der in Fig. 3 gezeigte Gummizahnriemen ist ebenfalls mit einem verkautschukten Armierungsgewebe 22 auf der mit Zähnen 21 versehenen Laufseite ausgestattet. Die Beschichtung 32 mit der polymerhaltigen Matrix ist bei dieser Ausführung bedeutend dicker, da sie Füllstoffe 33, die eine dämpfende Wirkung besitzen, enthält. Als Füllstoffe 33 eignen sich Gummimehl, Fasern, Graphit, Polyamidpulver und ähnliches.

In den drei vorstehend geschilderten Ausführungsbeispielen sind jeweils die bewegungsübertragenden Riemenoberflächen mit einer PTFE-haltigen, vernetzten Polymermatrix beschichtet. Es ist aber auch möglich, den Riemen vollständig zu beschichten.

Zur Herstellung der Beschichtung 12, 32 wird die 20% PTFE enthaltende flüssige Polymermatrix, die monomere oder oligomere Polymerbausteine auf der Basis von Isocyanat in einem Lösungsmittel enthält, auf die Riemenoberflächen aufgesprüht und einem Trocknungsvorgang unterworfen, bei dem die Polymermatrix auf der Riemenoberfläche vernetzt. Durch diesen Vorgang wird eine Vernetzung mit der elastomeren Unterlage, dem Riemenkörper, vorgenommen, die zu einer stoffschlüssigen Verbindung der Beschichtung ohne feststellbare Grenzschichtbildung abläuft.

## Patentansprüche

1. Kraftübertragungsriemen aus elastomerem Werkstoff mit einer in dem elastischen Riemenkörper eingebetteten Zugträgerlage und mit einer reibungsverringernden, die Gleiteigenschaften begünstigenden Ausbildung,
**dadurch gekennzeichnet**,
daß mindestens die verschleißabhängigen, bewegungsübertragenden Oberflächen (11, 22) des Kraftübertragungsriemens eine Beschichtung (12, 32) aufweisen, die mit der Riemenoberfläche mittels einer fluorhaltigen Kunststoff enthaltenden Polymermatrix vernetzt ist, wobei der fluorhaltige Kunststoff in der Polymermatrix grenzschichtlos eingebunden ist.

2. Kraftübertragungsriemen nach Anspruch 1, dadurch gekennzeichnet,
daß die Außenflächen des Riemens mit einem verkautschukten Armierungsgewebe (22) verbunden sind, das auf seiner Außenseite eine Beschichtung (12, 32) aus einer vernetzten, polymerhaltigen Matrix aufweist, die einen fluorhaltigen Kunststoff enthält.

3. Kraftübertragungsriemen nach Anspruch 1 oder 2, dadurch gekennzeichnet,
daß der fluorhaltige Kunststoff Polytetrafluorethylen ist.

4. Kraftübertragungsriemen nach Anspruch 1 oder 2, dadurch gekennzeichnet,
daß die auf den Riemenoberflächen vorhandene Beschichtung (12) mit kurzen Fasern (23) beflockt ist.

5. Kraftübertragungsriemen nach einem der Ansprüche 1 bis 4, dadurch gekennzeichnet,
daß die fluorkunststoffhaltige Beschichtung (32) einen Füllstoff (33) aus einem dämpfende Wirkung aufweisenden Werkstoff enthält.

6. Kraftübertragungsriemen nach einem der Ansprüche 1 bis 5, dadurch gekennzeichnet,
daß die fluorkunststoffhaltige Beschichtung (12, 32) einen Zusatz von leitfähigen Rußbestandteilen aufweist.

7. Verfahren zur Herstellung eines Kraftübertragungsriemens nach einem der Ansprüche 1 bis 5, dadurch gekennzeichnet,
daß auf mindestens die bewegungsübertragende Oberfläche des Kraftübertragungsriemens eine flüssige, fluorhaltigen Kunststoff enthaltende Polymermatrix, die vernetzbare Bestandteile enthält, aufgebracht wird, daß die Polymermatrix getrocknet wird und dabei einen Vernetzungsvorgang zur Bindung mit dem elastomeren Riemenkörper durchläuft.

8. Verfahren nach Anspruch 6, dadurch gekennzeichnet,
daß die flüssige Polymermatrix vor dem Vulkanisieren des Riemenkörpers aufgebracht wird.

9. Verfahren nach Anspruch 6 oder 7, dadurch gekennzeichnet,
daß die beschichteten Oberflächen des Kraftübertragungsriemens unter elektrostatischer Einwirkung mit kurzen Fasern beflockt werden.

## Claims

1. Power transmission belt formed from elastomeric material, having a tension carrier layer embedded in the resilient belt body, and having a friction-reducing configuration which enhances the sliding properties, characterised in that at least the wear-dependent, movement-transmitting surfaces (11, 22) of the power transmission belt have a coating (12, 32), which is cross-linked with the belt surface by means of a polymer matrix containing fluorine-containing plastics material, the fluorine-containing plastics material being bonded in the polymer matrix without any boundary layer.

2. Power transmission belt according to claim 1, characterised in that the external faces of the belt are connected to a rubber-coated reinforcing fabric (22), which has on its outer surface a coating (12, 32) formed from a cross-linked, polymer-containing matrix, which contains a fluorine-containing plastics material.

3. Power transmission belt according to claim 1 or 2, characterised in that the fluorine-containing plastics material is polytetrafluoroethylene.

4. Power transmission belt according to claim 1 or 2, characterised in that the coating (12), which is situated on the belt surfaces, is flocked with short fibres (23).

5. Power transmission belt according to one of claims 1 to 4, characterised in that the coating (32), containing fluorine plastics material, contains a filler substance (33) formed from a material having a damping effect.

6. Power transmission belt according to one of claims 1 to 5, characterised in that the coating (12, 32) containing fluorine plastics material has an addition of conductive carbon black constituent ingredients.

7. Method of producing a power transmission belt according to one of claims 1 to 5, characterised in that a liquid polymer matrix, containing fluorine-containing plastics material and cross-linkable constituent ingredients, is applied to at least the movement-transmitting surface of the power transmission belt, and in that the polymer matrix is dried and thereby passes through a cross-linking process to bind with the elastomeric belt body.

8. Method according to claim 6, characterised in that the liquid polymer matrix is applied prior to the vulcanisation of the belt body.

9. Method according to claim 6 or 7, characterised in that the coated surfaces of the power transmission belt are flocked with short fibres by an electrostatic action.

## Revendications

1. Courroie de transmission en élastomère, comprenant une nappe d'éléments supportant la traction noyée dans un corps de courroie élastique, courroie dont l'exécution diminue le frottement et favorise les propriétés de glissement, caractérisée en ce qu'au moins les faces de courroie (11, 12) transmettant le mouvement et soumises à l'usure présentent un revêtement (12, 32) qui est réticulé avec la surface de la courroie au moyen d'une matrice de polymère renfermant une matière plastique contenant du fluor et intégrée sans couche limite dans la matrice de polymère.

2. Courroie de transmission selon la revendication 1, caractérisée en ce que les faces extérieures de la courroie sont reliées à un tissu caoutchouté d'armature (22) qui présente sur son côté extérieur un revêtement (12, 32) formé d'une matrice réticulée contenant un polymère, qui renferme une matière plastique contenant du fluor.

3. Courroie de transmission selon la revendication 1 ou 2, caractérisée en ce que la matière plastique contenant du fluor est du polytétrafluoréthylène.

4. Courroie de transmission selon la revendication 1 ou 2, caractérisée en ce que le revêtement (12) porté par les faces de courroie est garni de courtes fibres (23) appliquées par flocage.

5. Courroie de transmission selon une des revendications 1 à 4, caractérisée en ce que le revêtement (32) renfermant un plastique fluoré, contient une charge (33) sous la forme d'un matériau ayant une action d'amortissement.

6. Courroie de transmission selon une des revendications 1 à 5, caractérisée en ce que le revêtement (12, 32) renfermant un plastique fluoré, présente une addition de constituants conducteurs de noir de carbone.

7. Procédé pour fabriquer une courroie de transmission selon une des revendications 1 à 5, caractérisé en ce que l'on applique sur au moins la surface de transmission de mouvement de la courroie une matrice de polymère liquide renfermant une matière plastique contenant du fluor, matrice qui contient des constituants réticulables, et que l'on sèche la matrice de polymère, laquelle passe, pendant le séchage, par un processus de réticulation en vue de la liaison avec le corps de courroie en élastomère.

8. Procédé selon la revendication 7, caractérisé en ce que l'on applique la matrice de polymère liquide avant la vulcanisation du corps de courroie.

9. Procédé selon la revendication 7 ou 8, caractérisé en ce que l'on garnit les faces de courroie revêtues de courtes fibres par flocage sous l'action d'un champ électrostatique.
